# EUROPÄISCHE PATENTANMELDUNG

(11) **EP 3 838 781 A1**
(43) Veröffentlichungstag der Anmeldung: **23.06.2021**
(21) Anmeldenummer: 20215876.2
(22) Anmeldetag: 21.12.2020
(51) Int. Cl.: B65B 69/00

(54) **DOSIERVORRICHTUNG ZUM ENTNEHMEN VON SCHÜTTGUT AUS EINEM FLEXIBLEN SCHÜTTGUTBEHÄLTER**

(30) Priorität: 20.12.2019 DE 102019135478
(71) Anmelder: Fliegl Agro-Center GmbH, 84556 Kastl (DE)
(72) Erfinder: Fliegl sen., Josef, 84556 Kastl (DE)
(74) Vertreter: Nußbaum, Christopher

(57) **Zusammenfassung**

Die Erfindung betrifft eine Dosiervorrichtung (10) zum Entnehmen von Schüttgut aus einem flexiblen Schüttgutbehälter (12), umfassend einen Dosierkörper (14) mit einer Mantelfläche (16) sowie mit einer oberen Öffnung (18) zum Zuführen von im Schüttgutbehälter (12) enthaltendem Schüttgut in den Dosierkörper (14) und mit einer unteren Öffnung, aus der das Schüttgut nach unten aus dem Dosierkörper (14) austreten kann; eine oberhalb vom Dosierkörper (14) zusammenlaufende Spitze (20) zum Durchstechen des Schüttgutbehälters (12); eine unterseitig am Dosierkörper (14) angeordnete Platte (28) mit einer Durchgangsöffnung (37), die unterhalb von der unteren Öffnung des Dosierkörpers (14) angeordnet ist; einen relativbeweglich zur Platte (28) gelagerten Schieber (30) zum Verschließen und Freigeben der Durchgangsöffnung (37); eine lösbare Rastkugelsicherung (36), mittels welcher der Schieber (30) in einer die Durchgangsöffnung (37) verschließenden Verschlussstellung fixierbar ist.

## Beschreibung

Die vorliegende Erfindung betrifft eine Dosiervorrichtung zum Entnehmen von Schüttgut aus einem flexiblen Schüttgutbehälter.

Dosiervorrichtungen zum Entnehmen von Schüttgut aus flexiblen Schüttgutbehältern, insbesondere aus sogenannten Bigbags, sind an sich schon bekannt. Ein Bigbag, englisch für großer Sack oder große Tasche, ist ein flexibler Schüttgutbehälter, der aussieht und benutzt werden kann wie ein großer Sack oder eine große Tasche mit Henkeln oder Schlaufen. Die international gebräuchliche Kurzbezeichnung lautet FIBC und steht als Abkürzung für Flexible Intermediate Bulk Container (englisch für flexibler Zwischenbehälter für Schüttgüter). Weitere Bezeichnungen sind Bulk bag und Jumbo bag. Solche flexiblen Schüttgutbehälter könnten beispielsweise dazu dienen, Tierfutter, Düngemittel, Samen, Pellets, Salz und dergleichen aufzunehmen.

Eine Dosiervorrichtung zum Entnehmen von Schüttgut aus einem flexiblen Schüttgutbehälter zeigt beispielsweise die EP 2 937 291 B1. Die dort gezeigte Dosiervorrichtung umfasst einen zylinderförmigen Dosierkörper mit einer Mantelfläche, wobei der Dosierkörper eine obere Öffnung zum Zuführen von in dem Schüttgutbehälter enthaltenem Schüttgut in den Dosierkörper und eine untere Öffnung aufweist, aus der das Schüttgut nach unten aus dem Dosierkörper austreten kann. Oberhalb vom Dosierkörper läuft eine Spitze zum Durchstechen des Schüttgutbehälters zusammen. Mittels eines unterseitig am Dosierkörper angeordneten verschwenkbaren Schiebers kann der Dosierkörper nach unten hin geöffnet und verschlossen werden, um so die Menge des aus dem Dosierkörper heraustretenden Schüttguts zu dosieren.

Es ist die Aufgabe der vorliegenden Erfindung, eine Lösung bereitzustellen, mittels welcher eine Dosiervorrichtung zum Entnehmen von Schüttgut aus einem flexiblen Schüttgutbehälter besonders einfach und zuverlässig verschlossen und geöffnet werden kann.

Diese Aufgabe wird durch eine Dosiervorrichtung mit den Merkmalen des Anspruchs 1 gelöst. Weitere mögliche Ausgestaltungen der Erfindung sind insbesondere in den abhängigen Ansprüchen angegeben.

Die erfindungsgemäße Dosiervorrichtung zum Entnehmen von Schüttgut aus einem flexiblen Schüttgutbehälter umfasst einen Dosierkörper mit einer Mantelfläche, wobei der Dosierkörper eine obere Öffnung zum Zuführen von in dem Schüttgutbehälter enthaltenem Schüttgut in den Dosierkörper und eine untere Öffnung aufweist, aus der das Schüttgut nach unten aus dem Dosierkörper austreten kann. Der Dosierkörper kann beispielsweise zylinderförmig ausgebildet sein, kann aber auch andere Formen aufweisen.

Oberhalb vom Dosierkörper läuft eine Spitze zum Durchstechen des Schüttgutbehälters zusammen. So können flexible Schüttgutbehälter, die zum Beispiel aus textilen Werkstoffen oder anderen flexiblen Materialen hergestellt sind, ganz einfach mittels der zusammenlaufenden Spitzen durchstochen werden, sodass der Dosierkörper zumindest teilweise in den flexiblen Schüttgutbehälter hineinbewegt werden kann. Insbesondere durch die obere Öffnung des Dosierkörpers kann dann das Schüttgut aus dem flexiblen Schüttgutbehälter in den Dosierkörper zugeführt werden, von wo aus das Schüttgut den Dosierkörper durch seine untere Öffnung verlassen kann.

Unterseitig am Dosierkörper ist eine Platte mit einer Durchgangsöffnung angeordnet, die unterhalb von der unteren Öffnung des Dosierkörpers angeordnet ist. Zum Verschließen und Öffnen des Dosierkörpers umfasst die Dosiervorrichtung eine relativbeweglich zur Platte gelagerten Schieber zum Verschließen und Freigeben der Durchgangsöffnung. Des Weiteren umfasst die Dosiervorrichtung eine lösbare Rastkugelsicherung, mittels welcher der Schieber in einer die Durchgangsöffnung verschließenden Verschlussstellung fixierbar ist.

Mittels der Rastkugelsicherung ist es auf einfache und zuverlässige Weise möglich, den Schieber wieder lösbar in seiner die Durchgangsöffnung verschließenden Verschlussstellung zu fixieren. Die Rastkugelsicherung kann insbesondere durch Betätigung des Schiebers beziehungsweise Kraftaufbringung am Schieber gelöst werden, wonach der Schieber dann relativ zur Platte bewegt werden kann, um die Durchgangsöffnung der Platte freizugeben. Insbesondere kann der Schieber nach dem Lösen der Rastkugelsicherung in unterschiedliche Stellungen bewegt werden, sodass die Durchgangsöffnung der Platte unterschiedlich weit freigegeben werden kann, sodass auf besonders einfache Weise die Menge des Schüttguts dosiert werden kann, welche aus dem Dosierkörper nach unten austritt.

Mittels der wieder lösbaren Rastkugelsicherung ist es möglich, den Schieber mit zumindest einem anderen Teil der Dosiervorrichtung so zu verrasten, dass der Schieber zuverlässig in seiner Verschlussstellung fixiert wird. Durch entsprechende Kraftaufbringung und Bewegung des Schiebers kann dann die Rastkugelsicherung bei Bedarf gelöst werden, nämlich dann, wenn das im Dosierkörper enthaltene Schüttgut nach unten aus dem Dosierkörper austreten können soll.

Eine mögliche Ausgestaltung der Erfindung sieht vor, dass die Rastkugelsicherung eine Kugel aufweist, die in der Verschlussstellung des Schiebers in einer Sperrstellung angeordnet ist, in der die Kugel sowohl teilweise in einer Öffnung der Platte als auch teilweise in einer Öffnung des Schiebers angeordnet ist und dadurch eine Bewegung des Schiebers sperrt. In dem Fall kann es insbesondere vorgesehen sein, dass die Platte direkt am Schieber anliegend angeordnet ist. In der Verschlussstellung sind die beiden Öffnungen, also die Öffnungen der Platte und des Schiebers, übereinander angeordnet, wobei sich die Kugel teilweise in beiden Öffnungen befindet, sodass eine Bewegung des Schiebers relativ zu der Platte zuverlässig gesperrt wird. Bei den Öffnungen in der Platte und im Schieber kann es sich insbesondere um Durchgangsöffnungen handeln, welche besonders einfach hergestellt werden können. Im Zusammenspiel zwischen den beiden Öffnungen und der Kugel ist es auf einfache Weise möglich, eine Rastverbindung herzustellen, mittels welcher die Relativbewegung des Schiebers zur Platte gesperrt werden kann.

Eine weitere mögliche Ausgestaltung der Erfindung sieht vor, dass die Rastkugelsicherung ein elastisches Rückstellelement aufweist, welches die Kugel mit einer Rückstellkraft in die Sperrstellung zwingt, wobei durch Bewegung des Schiebers unter Überwindung der Rückstellkraft die Kugel in eine Freigabestellung bewegbar ist, in der die Kugel nur noch in einer der beiden Öffnungen angeordnet ist und eine Relativbewegung des Schiebers zur Platte freigibt. Befindet sich also der Schieber in seiner Verschlussstellung, so übt das elastische Rückstellelement besagte Rückstellkraft auf, welche die Kugel in ihre Sperrstellung zwingt, in der die Kugel sowohl teilweise in der Öffnung der Platte als auch in der Öffnung des Schiebers angeordnet ist. Die Rückstellkraft des elastischen Rückstellelements sorgt also dafür, dass der Schieber nicht ohne gewisse Kraftaufbringung aus seiner Verschlussstellung herausbewegt werden kann. Dadurch kann eine besonders zuverlässige und wieder lösbare Fixierung des Schiebers in seiner Verschlussstellung realisiert werden.

In weiterer möglicher Ausgestaltung der Erfindung ist es vorgesehen, dass eine der beiden Öffnungen einen kleineren Durchmesser als die Kugel und die andere Öffnung einen größeren Durchmesser als die Kugel aufweist, wodurch die Kugel in ihrer Sperrstellung zu einem größeren Teil in der Öffnung mit dem größeren Durchmesser angeordnet ist und in ihrer Freigabestellung vollständig in die Öffnung mit dem größeren Durchmesser gezwungen wird. Dadurch, dass eine der beiden Öffnungen kleiner als der Durchmesser der Kugel ist, kann die Kugel nicht vollständig in die Öffnung mit dem kleinen Durchmesser eindringen beziehungsweise eintauchen. Wird der Schieber durch entsprechende Kraftaufbringung also aus seiner Verschlussstellung herausbewegt, so gleitet die Kugel an einer Kante beziehungsweise an einem Rand derjenigen Öffnung ab, die einen kleineren Durchmesser als die Kugel aufweist. Infolgedessen wird die Kugel aus der Öffnung mit dem kleineren Durchmesser bei entsprechender Weiterbewegung des Schiebers immer tiefer in die Öffnung mit dem größeren Durchmesser hineinbewegt, bis die Kugel vollständig in der Öffnung mit dem größeren Durchmesser angeordnet ist. Dadurch, dass sich die Kugel vollständig in die Öffnung mit dem größeren Durchmesser hineinbewegt hat, sperrt die Kugel die Relativbewegung zwischen Schieber und Platte nicht mehr, sodass der Schieber problemlos relativ zur Platte bewegt werden kann, um die Durchgangsöffnung der Platte freizugeben.

Eine weitere mögliche Ausgestaltung der Erfindung sieht vor, dass das Rückstellelement an einer von der Öffnung mit dem kleineren Durchmesser abgewandten Seite die Rückstellkraft auf die Kugel ausübt. Dadurch kann zuverlässig sichergestellt werden, dass die Rückstellkraft jederzeit problemlos auf die Kugel ausgeübt werden kann.

In weiterer möglicher Ausgestaltung der Erfindung ist es vorgesehen, dass die Öffnung mit dem kleineren Durchmesser im Schieber und die Öffnung mit dem größeren Durchmesser in der Platte vorgesehen ist. Wird also der Schieber aus seiner Verschlussstellung herausbewegt und in Folge dessen die Kugel quer zur Bewegungsrichtung des Schiebers bewegt, ragt die Kugel irgendwann gar nicht mehr in die Öffnung des Schiebers und wird vollständig in die Öffnung mit dem größeren Schieber in der Platte bewegt. Die Kugel verbleibt also zumindest im Wesentlichen immer an derselben Stelle bezogen auf die Querrichtung der Dosiervorrichtung, verbleibt also zumindest teilweise immer in der Öffnung mit dem größeren Durchmesser der Platte. Dadurch lässt sich eine Verliersicherung der Kugel auf besonders zuverlässige Weise sicherstellen.

Eine weitere mögliche Ausgestaltung der Erfindung sieht vor, dass das Rückstellelement eine außenseitig an einer der Öffnungen befestigte elastische Platte, insbesondere aus Gummi, ist. Das als elastische Platte ausgebildete Rückstellelement verschließt also außenseitig eine der beiden Öffnungen, sodass bezüglich dieser Öffnung sichergestellt werden kann, dass die Kugel auch nicht aus dieser Öffnung herausfallen kann. Insbesondere kann es vorgesehen sein, dass das Rückstellelement außenseitig an der Öffnung mit dem größeren Durchmesser befestigt ist, deren Durchmesser größer als der Durchmesser der Kugel ist. So kann zuverlässig sichergestellt werden, dass die Kugel nie verloren gehen kann.

In weiterer möglicher Ausgestaltung der Erfindung ist es vorgesehen, dass der Schieber translatorisch bewegbar zur Platte gelagert ist. Durch translatorisches Verschieben des Schiebers kann dieser also ganz einfach aus seiner Verschlussstellung herausbewegt werden, um die Durchgangsöffnung der Platte so weit freizugeben, wie Schüttgut nach unten aus dem Dosierkörper austreten können soll. Beispielsweise können oberseitig an der Platte Führungen angeordnet sein, mittels welchen der Schieber translatorisch bewegbar zur Platte gelagert ist. Dadurch ergibt sich eine besonders zuverlässige und robuste Lagerung des Schiebers.

Eine alternative mögliche Ausgestaltung der Erfindung sieht vor, dass der Schieber verschwenkbar zur Platte gelagert ist. Beispielsweise kann der Schieber verschwenkbar an der Platte gelagert sein, und zwar um eine Achse, die parallel zur Hochrichtung der Dosiervorrichtung verläuft. Durch Verschwenken des Schiebers relativ zur Platte kann die Durchgangsöffnung der Platte bei Bedarf geschlossen und geöffnet werden, um so die Menge zu dosieren, mit der das Schüttgut den Dosierkörper nach unten verlassen soll.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht einer Dosiervorrichtung zum Entnehmen von Schüttgut aus einem flexiblen Schüttgutbehälter, wobei die Dosiervorrichtung mit einer Spitze und einem Teil eines Dosierkörpers von unten in den Schüttgutbehälter hineinbewegt worden ist;
- Fig. 2: eine Draufsicht auf die Dosiervorrichtung;
- Fig. 3: eine Seitenschnittansicht der Dosiervorrichtung entlang der in Fig. 2 gekennzeichneten Schnittebene A-A;
- Fig. 4: eine Detailansicht des in Fig. 3 gekennzeichneten Bereichs B, in der eine lösbare Rastkugelsicherung dargestellt ist.

In den Figuren sind gleiche oder funktionsgleiche Elemente mit den gleichen Bezugszeichen versehen.

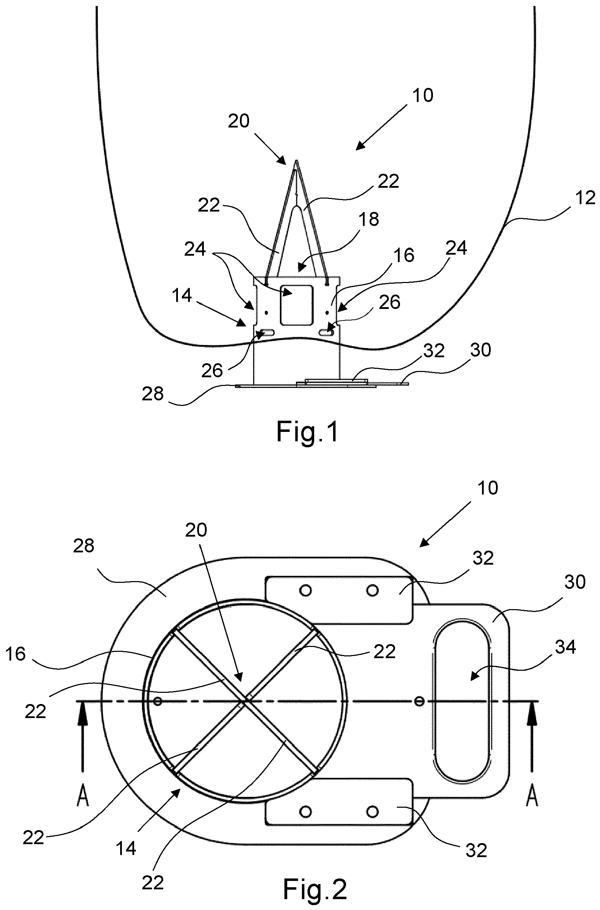

Eine Dosiervorrichtung 10 zum Entnehmen von Schüttgut aus einem flexiblen Schüttgutbehälter 12 ist in einer Seitenansicht in Fig. 1 gezeigt. Bei dem flexiblen Schüttgutbehälter 12 kann es sich insbesondere um einen sogenannten Bigbag handeln, der beispielsweise aus einem Textil hergestellt sein kann. Mittels solcher Schüttgutbehälter 12 können unterschiedlichste Arten von Schüttgut, wie beispielsweise Getreide oder auch andere Schüttgüter aufgenommen werden. Die Dosiervorrichtung 10 umfasst einen Dosierkörper 14 mit einer Mantelfläche 16 sowie mit einer oberen Öffnung 18 zum Zuführen von im Schüttgutbehälter 12 enthaltenem Schüttgut in den Dosierkörper 14 und mit einer hier nicht näher erkennbaren unteren Öffnung, aus der das Schüttgut nach unten aus dem Dosierkörper 14 austreten kann. Oberhalb vom Dosierkörper 14 läuft eine Spitze 20 zum Durchstechen des Schüttgutbehälters 12 zusammen. Vorliegend wird die Spitze 20 durch mehrere Streben 22 gebildet, die innenseitig am Dosierkörper 14 befestigt sind und nach oben spitz zusammenlaufen.

Der Schüttgutbehälter 12 kann von oben auf die Dosiervorrichtung 10 aufgesetzt werden, infolgedessen der untere Bereich des Schüttgutbehälters 12 als aller erstes mit der Spitze 20 in Kontakt kommt, infolgedessen der Schüttgutbehälter 12 aufgestochen beziehungsweise durchstochen wird. Durch weiteres Absenken des Schüttgutbehälters 12 wird die mittels der Spitze 20 hergestellte Öffnung durch die schräg gestellten Streben 22 immer weiter aufgeweitet, wobei der Schüttgutbehälter 12, wie hier dargestellt, noch teilweise über den Dosierkörper 14 gestülpt werden kann. Der Dosierkörper 14 kann über den Umfang verteilt noch mehrere Öffnungen 24 aufweisen, durch welche Schüttgut ins Innere des Dosierkörpers 14 gelangen kann. Des Weiteren kann der Dosierkörper 14 noch weitere Öffnungen 26 aufweisen, in die beispielsweise hier nicht dargestellte Widerhaken eingesteckt werden können, welche dazu dienen, ein Herausziehen des Schüttgutbehälters 12 nach oben zu sperren beziehungsweise zu erschweren.

Unterseitig am Dosierkörper 14 ist eine Platte 28 mit einer hier nicht näher gekennzeichneten Durchgangsöffnung angeordnet, die unterhalb von der hier nicht näher erkennbaren unteren Öffnung des Dosierkörpers 14 angeordnet ist. Zudem umfasst die Dosiervorrichtung 10 einen relativbeweglich zur Platte 28 gelagerten Schieber 30 zum Verschließen und Freigeben der Durchgangsöffnung der Platte 28.

In Fig. 2 ist die Dosiervorrichtung 10 in einer Draufsicht gezeigt. Vorliegend kann man gut erkennen, dass die Platte 28 größer ist als der Schieber 30, wobei der Schieber 30 translatorisch zu der Platte 28 über jeweilige Führungen 32 gelagert ist. Der Schieber 30 ist in jeweiligen seitlichen Bereichen durch die Führungen 32 gelagert, wobei der Dosierkörper 14 eine hier nicht erkennbare schlitzförmige Öffnung in der Mantelfläche 16 aufweist, durch welche der Schieber 30 hineingeschoben und herausbewegt werden kann. Der Schieber 30 ist dabei in Hochrichtung der Dosiervorrichtung 10 zwischen den Führungen 32 und der Platte 28 angeordnet. Der Schieber weist eine Öffnung 34 auf, sodass ein Benutzer den Schieber 30 ganz einfach und bequem ergreifen kann. Die Bewegung des Schiebers 30 erfolgt also quer zur Hochrichtung des Dosiervorrichtung 10.

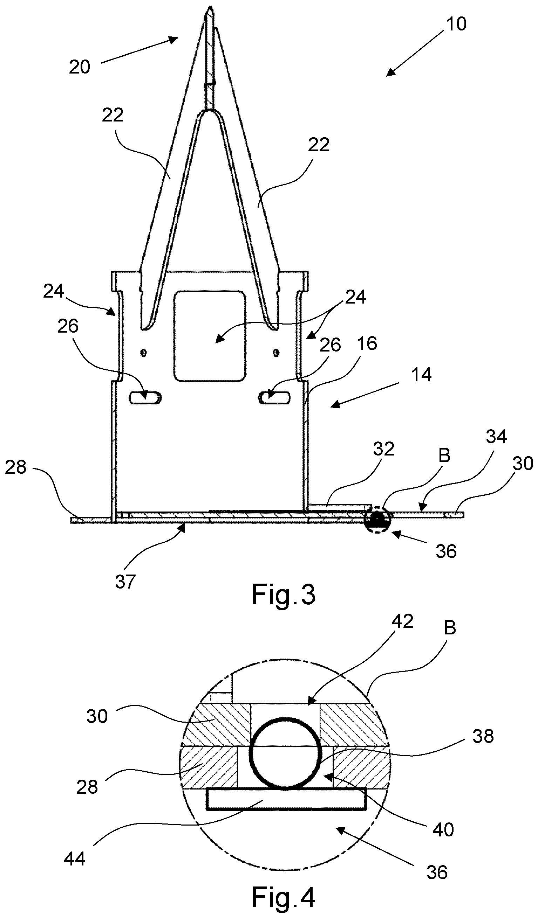

In Fig. 3 ist die Dosiervorrichtung 10 entlang der in Fig. 2 gekennzeichneten Schnittebene A-A dargestellt. Vorliegend kann man erstmals die zuvor bereits erwähnte Durchgangsöffnung 37 in der Platte 28 erkennen. Der Schieber 30 ist vorliegend in seiner Verschlussstellung gezeigt, in welcher der Schieber 30 die Durchgangsöffnung 37 vollständig verschließt, sodass innerhalb des Dosierkörpers 14 aufgenommenes Schüttgut nicht nach unten aus dem Dosierkörper 14 austreten kann. In einem hier gekennzeichneten Bereich B ist eine Rastkugelsicherung 36 der Dosiervorrichtung 10 vorgesehen, mittels welcher der Schieber 30 in seiner hier gezeigten, die Durchgangsöffnung 37 der Platte 28 verschließenden Verschlussstellung fixiert werden kann.

In Fig. 4 ist der Bereich B in einer Detailansicht gezeigt. Die Rastkugelsicherung 36 weist eine Kugel 38 auf, die in der hier gezeigten Verschlussstellung des Schiebers 30 in einer Sperrstellung angeordnet ist, in der die Kugel 38 sowohl teilweise in einer Öffnung 40 der Platte 28 als auch teilweise in einer Öffnung 42 des Schiebers 30 angeordnet ist und dadurch eine Bewegung des Schiebers 30 sperrt. Die Rastkugelsicherung 36 umfasst zudem ein elastisches Rückstellelement 44, welches die Kugel 38 mit einer Rückstellkraft in die Sperrstellung zwingt. Bei dem Rückstellelement 44 handelt es sich vorliegend um eine außenseitig an der Öffnung 34 befestigte elastische Platte, die beispielsweise aus Gummi hergestellt sein kann.

Durch die Bewegung des Schiebers 30 - gemäß der vorliegenden Darstellung nach rechts - unter Überwindung der Rückstellkraft des Rückstellelements 44 kann die Kugel 38 in eine Freigabestellung bewegt werden, in der die Kugel 38 nur noch in der Öffnung 40 angeordnet ist und dadurch eine Relativbewegung des Schiebers 30 zur Platte 28 freigibt. Wie zu erkennen, weist die Öffnung 40 in der Platte 28 einen größeren Durchmesser als die Kugel 38 auf, wobei die Öffnung 42 im Schieber 30 einen kleineren Durchmesser als die Kugel 38 aufweist. Die Kugel 38 kann dadurch also nicht vollständig in die Öffnung 42 eintauchen.

Dadurch dass die Kugel 38 in ihrer Sperrstellung nicht vollständig in die Öffnung 42 eintaucht, wird das Verschieben des Schiebers 30 und das Herunterdrücken der Kugel 38 in Richtung des Rückstellelements 44 erleichtert. Wird durch entsprechende Kraftbeaufschlagung und Bewegung der Schieber 30 also soweit relativ zu der Platte 28 verschoben, dass die Öffnung 42 nicht mehr über der Öffnung 40 angeordnet ist, so drückt die hier nicht näher bezeichnete Unterseite des Schiebers 30 die Kugel 38 unter Ausbeulung des elastischen Rückstellelements 44 die Kugel 38 soweit nach unten, dass die Kugel 38 oberseitig an der Unterseite des Schiebers 30 anliegt. Dadurch, dass das elastische Rückstellelement 44 die Öffnung 40 unterseitig vollständig überdeckt, kann die Kugel 38 nicht herausfallen. Beim weiteren Verschieben des Schiebers 30 kann die Kugel 38 einfach an der Oberseite des elastischen Rückstellelements 44 und an der Unterseite des Schiebers 30 abrollen, infolgedessen der Schieber 30 relativ leichtgängig zur Platte 28 verschoben werden kann.

Je nachdem, wieweit man die Durchgangsöffnung 37 in der Platte 28 mit dem Schieber 30 freigeben möchte, kann der Schieber 30 entsprechend weit verschoben werden. Soll die Durchgangsöffnung 37 in der Platte 28 wiederum verschlossen werden, so muss der Schieber 30 - gemäß der Darstellung in den Figuren 3 und 4 - einfach nur wieder so weit nach links verschoben werden, bis die Durchgangsöffnung 37 oberseitig vollständig von dem Schieber 30 verdeckt wird. Dann nimmt der Schieber 30 wiederum seine Verschlussstellung ein, in der die Rastkugelsicherung 36 in der bereits beschriebenen Weise dafür sorgt, dass der Schieber 30 in seiner die Durchgangsöffnung 37 verschließenden Verschlussstellung an der Platte 28 fixiert bleibt.

### BEZUGSZEICHENLISTE

- 10: Dosiervorrichtung
- 12: flexibler Schüttgutbehälter
- 14: Dosierkörper
- 16: Mantelfläche des Dosierkörpers
- 18: obere Öffnung des Dosierkörpers
- 20: oberhalb vom Dosierkörper zusammenlaufende Spitze
- 22: Streben
- 24: Öffnungen in der Mantelfläche
- 26: Öffnungen in der Mantelfläche
- 28: Platte
- 30: Schieber
- 32: Führungen
- 34: Öffnung im Schieber
- 36: Rastkugelsicherung
- 37: Durchgangsöffnung in der Platte
- 38: Kugel
- 40: Öffnung in der Platte
- 42: Öffnung im Schieber
- 44: elastisches Rückstellelement
- B: Bereich

## Patentansprüche

1. Dosiervorrichtung (10) zum Entnehmen von Schüttgut aus einem flexiblen Schüttgutbehälter (12), umfassend
- einen Dosierkörper (14) mit einer Mantelfläche (16) sowie mit einer oberen Öffnung (18) zum Zuführen von im Schüttgutbehälter (12) enthaltendem Schüttgut in den Dosierkörper (14) und mit einer unteren Öffnung, aus der das Schüttgut nach unten aus dem Dosierkörper (14) austreten kann;
- eine oberhalb vom Dosierkörper (14) zusammenlaufende Spitze (20) zum Durchstechen des Schüttgutbehälters (12);
- eine unterseitig am Dosierkörper (14) angeordnete Platte (28) mit einer Durchgangsöffnung (37), die unterhalb von der unteren Öffnung des Dosierkörpers (14) angeordnet ist;
- einen relativbeweglich zur Platte (28) gelagerten Schieber (30) zum Verschließen und Freigeben der Durchgangsöffnung (37);
- eine lösbare Rastkugelsicherung (36), mittels welcher der Schieber (30) in einer die Durchgangsöffnung (37) verschließenden Verschlussstellung fixierbar ist.

2. Dosiervorrichtung (10) nach Anspruch 1,
**dadurch gekennzeichnet, dass**
die Rastkugelsicherung (36) eine Kugel (38) aufweist, die in der Verschlussstellung des Schiebers (30) in einer Sperrstellung angeordnet ist, in der die Kugel (38) sowohl teilweise in einer Öffnung (40) der Platte (38) als auch teilweise in einer Öffnung (42) des Schiebers (30) angeordnet ist und dadurch eine Bewegung des Schiebers (30) sperrt.

3. Dosiervorrichtung (10) nach Anspruch 2,
**dadurch gekennzeichnet, dass**
die Rastkugelsicherung (36) ein elastisches Rückstellelement (44) aufweist, welches die Kugel (38) mit einer Rückstellkraft in die Sperrstellung zwingt, wobei durch Bewegung des Schiebers (30) unter Überwindung der Rückstellkraft die Kugel (38) in eine Freigabestellung bewegbar ist, in der die Kugel (38) nur noch in einer der beiden Öffnungen (40) angeordnet ist und eine Relativbewegung des Schiebers (30) zur Platte (28) freigibt.

4. Dosiervorrichtung (10) nach Anspruch 2 oder 3,
**dadurch gekennzeichnet, dass**
eine der beiden Öffnungen (42) einen kleineren Durchmesser als die Kugel (38) und die andere Öffnung (44) einen größeren Durchmesser als die Kugel (38) aufweist, wodurch die Kugel (38) in ihrer Sperrstellung zu einem größeren Teil in der Öffnung (40) mit dem größeren Durchmesser angeordnet ist und in ihrer Freigabestellung vollständig in die Öffnung (40) mit dem größeren Durchmesser gezwungen wird.

5. Dosiervorrichtung (10) nach Anspruch 4,
**dadurch gekennzeichnet, dass**
das Rückstellelement (44) an einer von der Öffnung (42) mit dem kleineren Durchmesser abgewandten Seite die Rückstellkraft auf die Kugel (38) ausübt.

6. Dosiervorrichtung (10) nach Anspruch 4 oder 5,
**dadurch gekennzeichnet, dass**
die Öffnung (42) mit dem kleineren Durchmesser im Schieber (30) und die Öffnung mit dem größeren Durchmesser (40) in der Platte (28) vorgesehen ist.

7. Dosiervorrichtung (10) nach einem der Ansprüche 3 bis 6,
**dadurch gekennzeichnet, dass**
das Rückstellelement (44) eine außenseitig an einer der Öffnungen (40) befestigte elastische Platte, insbesondere aus Gummi, ist.

8. Dosiervorrichtung (10) nach einem der vorhergehenden Ansprüche,
**dadurch gekennzeichnet, dass**
der Schieber (30) translatorisch bewegbar zur Platte (28) gelagert ist.

9. Dosiervorrichtung (10) nach einem der Ansprüche 1 bis 7,
**dadurch gekennzeichnet, dass**
der Schieber (30) verschwenkbar zur Platte (28) gelagert ist.
